# EUROPÄISCHE PATENTANMELDUNG

(11) **EP 0 604 871 A1**
(43) Veröffentlichungstag der Anmeldung: **06.07.1994**
(21) Anmeldenummer: 93120565.2
(22) Anmeldetag: 21.12.1993
(51) Int. Cl.: H04H 1/00, G11B 5/02

(54) **Verfahren und Vorrichtung zur Aufnahmeprogrammierung**

(30) Priorität: 30.12.1992 DE 4244531
(71) Anmelder: DEUTSCHE THOMSON-BRANDT GMBH, D-78048 Villingen-Schwenningen (DE)
(72) Erfinder: Spille, Jens, D-30880 Laatzen (DE)

(57) **Zusammenfassung**

Die Erfindung betrifft die Aufnahmeprogrammierung eines Programmbeitrages unter Verwendung eines Rundfunkempfängers mit einer daran angeschlossenen Aufzeichnungseinrichtung (10), wobei mit einem Rundfunksignal Zusatzinformationen übertragen werden, welche eine spezifische Information über den Programmbeitrag enthalten. Während der Rundfunkübertragung eines bestimmten Programmbeitrages werden nach Vorgabe eines bestimmten Eingabebefehls des Benutzers die spezifischen Informationen oder Quellenangaben über den aktuellen Aufzeichnungs/Programmierbeitrag in einem Speicher (13, 15) gespeichert; der Speicherinhalt wird ständig mit den nachfolgend empfangenen Zusatzdaten in einer Datenverarbeitungs/Auswertschaltung (9) verglichen. Eine Aufnahme des gleichen Programmbeitrages wird automatisch dann ausgelöst, sobald eine Übertragung der spezifischen Informationen festgestellt wird.

## Beschreibung

Die Erfindung betrifft ein Verfahren und eine Vorrichtung zur Aufnahmeprogrammierung eines Programmbeitrages unter Verwendung eines Rundfunkempfängers mit einer daran angeschlossenen Aufzeichnungseinrichtung, wobei mit einem Rundfunksignal Zusatzdaten, welche eine spezifische Information über den Programmbeitrag enthalten, übertragen werden.

Häufig stellt sich beim Benutzer der Wunsch ein, einen aktuell wahrgenommenen Programmbeitrag zu speichern oder aufzuzeichnen, da ihm die Musik oder der Film oder ein sonstiger Programmbeitrag besonders gut gefällt. Würde der Benutzer sofort mit einer Aufzeichnung starten, könnte er jedoch nur einen Teil des Programmbeitrages aufzeichnen, da die bereits vorher übertragenen Teile des Programmbeitrags ohne weiteres nicht mehr aufzuzeichnen sind.

Der Erfindung liegt daher die Aufgabe zugrunde, eine Möglichkeit zum vollständigen Aufzeichnen eines von einem Benutzer aktuell wahrgenommenen Programmbeitrages anzugeben. Diese Aufgabe wird durch das in Anspruch 1 angegebene Verfahren gelöst.

Der Erfindung liegt die weitere Aufgabe zugrunde, eine Vorrichtung für das erfindungsgemäße Verfahren anzugeben. Diese Aufgabe wird durch die in Anspruch 8 angegebene Vorrichtung gelöst.

Im Hör- und Fernsehrundfunk können neben dem eigentlichen Programmbeitrag (z.B. Musikstück, Hörspiel, Fernsehfilm) auch noch Zusatzdaten übertragen werden, die eine spezifische Zusatzinformation, z.B. Quellenangabe über den gerade ausgesendeten Programmbeitrag, enthalten. Eine solche Information ist z.B. aus "Digitaler Hörfunk über Rundfunksatelliten", Bundesminister für Forschung und Technologie, Bundesrepublik Deutschland, 1983, bekannt. Es ist z.B. für den Hörrundfunk geplant, den Musiktitel, eine Platten-Nr.und/oder andere aus dem o.g. Dokument bekannten Quellenangaben neben dem eigentlichen hörbaren Programmbeitrag digitalisiert zu übertragen, so daß ein Benutzer diese Informationen in einer geeigneten Anzeigeeinrichtung empfangsseitig anzeigen lassen kann.

Der Erfindung liegt nun die Idee zugrunde, eine Aufzeichnungseinrichtung mit Empfangsteil oder einen Rundfunkempfänger mit angeschlossenen Recorder während der Aussendung eines Programmbeitrages mittels einer einfachen Bedienung einer Bedienungseinrichtung am Recorder oder Empfänger oder der Aufzeichnungseinrichtung zu programmieren. Bei der Programmierung werden, z.B. durch Drücken einer speziellen Taste, die auch auf einer Fernbedienung angeordnet sein kann, die Zusatzinformationen über den aktuell ausgesendeten/übertragenen Programmbeitrag in einem Speicher in dem Recorder oder Empfänger oder der Aufzeichnungseinrichtung gespeichert. Wird später ein Programmbeitrag mit der gleichen Zusatzinformation in einem beliebigen Kanal übertragen, so stellt der Recorder oder Empfänger oder die Aufzeichnungseinrichtung dieses rechtzeitig vor Beginn des zugehörigen Programmbeitrags durch eine Analyse der gesendeten Zusatzinformationen fest und löst eine automatische Aufzeichnung dieses Programmbeitrages aus.

Insbesondere beim Hörrundfunk, bei dem einzelne Musiktitel im allgemeinen in Programmzeitschriften nicht angekündigt werden, steht dem Benutzer mittels der Erfindung eine praktische Programmiermöglichkeit zur Verfügung.

Es ist vorteilhaft, wenn eine automatische Aufzeichnung nur dann erfolgt, wenn zusätzlich zu den bislang beschriebenen und z.B. einige Sekunden oder Minuten vorher übertragenen Zusatzinformationen auch Startinformationen, z.B. ein binäres Startwort, übertragen werden, welche nur beim tatsächlichen Beginn bzw. Start des Programmbeitrages gesendet werden. Eine automatische Aufzeichnung ist somit gewährleistet, wenn der Empfänger die Startinformationen und die gewünschten Zusatzinformationen empfängt, mit den gespeicherten Informationen vergleicht und Übereinstimmung feststellt. Das Startwort kann auch eine binär codierte Zeitinformation sein.

Im Prinzip besteht daß erfindungsgemäße Verfahren in einer Aufnahme-Programmierung eines Programmbeitrages in einem Rundfunkempfangsgerät mit einer angeschlossenen Aufzeichnungseinrichtung, wobei mit einem Rundfunksignal Zusatzinformationen, welche eine spezifische Information und/oder Quellenangabe über den Aufzeichnungs/Programmbeitrag enthalten, empfangen werden, wobei während der Rundfunkübertragung eines bestimmten Programmbeitrages nach Vorgabe eines bestimmten Eingabebefehls des Benutzers die Zusatzinformationen in einem Speicher gespeichert werden, der Speicherinhalt ständig mit den nachfolgend empfangenen Zusatzinformationen in einer Datenverarbeitungs/Auswerteschaltung verglichen wird, und nach dem Ende des aktuellen Aufzeichnungs/Programmbeitrages eine Aufnahme des gleichen Programmbeitrages automatisch dann ausgelöst wird, sobald eine Übertragung der Zusatzinformationen festgestellt wird.

Vorteilhafte Weiterbildungen des erfindungsgemäßen Verfahrens ergeben sich aus den zugehörigen abhängigen Ansprüchen.

Im Prinzip dient die erfindungsgemäße Vorrichtung zur Aufnahme-Programmierung eines Rundfunk-Programmbeitrages mit einer angeschlossenen Aufzeichnungseinrichtung, wobei mit dem Rundfunksignal Zusatzinformationen, welche eine spezifische Information und/oder Quellenangabe über den Aufzeichnungs/Programmbeitrag enthalten, empfangen werden, und ist versehen mit:
- Empfangs- oder Decodiermitteln für das Rundfunksignal mit nachfolgenden Decodier- bzw. Demodulationsmitteln für die Zusatzinformationen;
- an eine Datenverarbeitungs/Auswerteschaltung angeschlossene Eingabemittel, über die nach Vorgabe eines bestimmten Eingabebefehls eines Benutzers während der Rundfunkübertragung eines bestimmten Programmbeitrages die decodierten bzw. demodulierten Zusatzinformationen in Speichermitteln gespeichert werden, wobei nachfolgend dieser Speicherinhalt ständig in der Datenverarbeitungs/Auswerteschaltung, die ebenfalls die Empfangs- oder Decodiermittel steuert, mit den nachfolgend von den Decodier- bzw. Demodulationsmitteln abgegebenen Zusatzinformationen verglichen wird und eine Aufnahme des gleichen Programmbeitrages mit der Aufzeichnungseinrichtung automatisch ausgelöst wird, sobald eine Übertragung der Zusatzinformationen im gleichen oder in einem anderen Kanal festgestellt wird.

Vorteilhafte Weiterbildungen der erfindungsgemäßen Vorrichtung ergeben sich aus dem zugehörigen abhängigen Anspruch.

Anhand der Zeichnung sind Ausführungs-Beispiele der Erfindung beschrieben. Diese zeigt in:

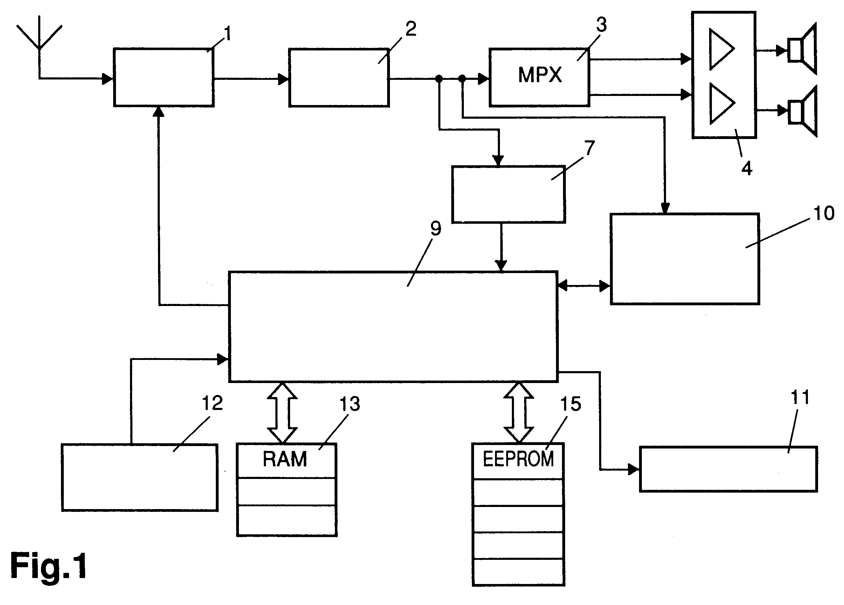

- Fig. 1: Vorrichtung zur automatischen Aufzeichnung von Programmbeiträgen.

Die Figur zeigt einen Rundfunkempfänger mit einem Tuner 1, einer nachfolgenden ZF-Verarbeitungsstufe 2, einem nachfolgenden Multiplexer 3, der z.B. eine Stereo-Decodierung durchführt, mit einer nachfolgenden Verstärkerstufe 4 zur Ansteuerung von Lautsprechern, mit einem als RDS-Decoder ausgebildeten Zusatzinformations-Decoder 7, dem das Ausgangssignal der ZF-Verarbeitungsstufe zugeführt wird, mit einem mit dem RDS-Decoder verbundenen Mikroprozessor 9, mit einem an den Mikroprozessor angeschlossenen Bedienteil 12, einem an den Mikroprozessor angeschlossenen Speicher-RAM 13, einem an den Mikroprozessor angeschlossenen Speicher-EEPROM 15 und einem an den Mikroprozessor angeschlossenen Display 11. Der Rundfunkempfänger ist mit einer Aufzeichnungseinrichtung 10 zur Aufzeichnung des empfangenen Programmbeitrags bzw. Rundfunkprogramms verbunden oder ausgerüstet.
Während der Rundfunkübertragung eines bestimmten Aufzeichnungs/Programmbeitrages werden nach Vorgabe eines entsprechenden Eingabebefehls des Benutzers über das Bedienteil 12 die Zusatzinformationen über den bestimmten Aufzeichnungs/Programmbeitrag in einem Speicher-RAM 13 flüchtig und/oder EEPROM 15 nichtflüchtig gespeichert.
Der Speicherinhalt wird nun ständig im Mikroprozessor 9 mit den nachfolgend empfangenen und im Decoder 7 decodierten Zusatzinformationen verglichen.
Wird Koinzidenz zwischen gespeicherten Daten und empfangenen Daten und der Empfang eines festgelegten Startwortes festgestellt, wird ein Steuersignal im Mikroprozessor erzeugt und der Aufzeichnungseinrichtung 10 übermittelt und damit eine automatische Aufzeichnung des aktuellen Aufzeichnungs/Programmbeitrages ausgelöst. Mit dem Steuersignal kann auch die Aufzeichnungseinrichtung eingeschaltet oder aktiviert werden.

Am Display 11 können alle empfangenen Zusatzinformationen, aber auch das Vorliegen des erzeugten Steuersignals und der automatischen Aufnahme, angezeigt werden.

Ein Vergleich der Zusatzinformationen mit gespeicherten Zusatzinformationen kann auch unabhängig vom eingestellten Sender erfolgen. Nach einer Aufnahme werden die zur Aufnahme benötigten Informationen im Speicher gelöscht, um eine zweite bzw. doppelte Aufnahme zu vermeiden.

Als Zusatzinformations-Decoder kann außer einem RDS-Decoder (Radio Daten System) auch jeder andere Zusatzinformations-Decoder, z.B. ein DAB-Zusatzinformations-Decoder, verwendet werden. Ebenso kann der Rundfunkempfänger ein DAB-Empfänger (Digital Audio Broadcasting) oder ein Fernseh-Empfänger sein. Die Aufzeichnungseinrichtung, z.B. ein Videorecorder, kann in der Lage sein, analoge und/oder digitalisierte Rundfunksignale zu speichern. Im Fall eines DAB-Systems können die Zusatzinformationen im PAD-Bereich (Programme Associated Data) des Audio-Bitstroms übertragen werden.

Als Zusatzinformationen können folgende Daten dienen:
- ISRC (international standard recording code) ISO 3901, 5 characters + 7 digits, 1x pro 10 Sekunden;
- UPC (universal product code);
- EAN (European article number)
- DCC-Text (ITTS).

Diese Kennzeichnungen sind schon jetzt auf der CD und DCC vorgesehen. Daraus ergibt sich, daß spätestens nach 10s ein DAB-Empfänger den Anfang eines Musikstücks kennt. Mit Hilfe eines Zwischenspeichers, wie z.B. bei der MD zur Überbrückung von Signalausfällen verwendet, kann dann der Programmbeitrag - auch ohne separaten Startcode - automatisch von Anfang an aufgezeichnet bzw. gespeichert werden.
Es kann dann auch statt der oben beschriebenen Zusatzinformationen (oder zusätzlich) ein kleiner Zeitabschnitt des Programmbeitrag-Signals in RAM 13 gespeichert werden, in PCM-Form oder in datenreduziert codierter Form. Mit Hilfe einer Korrelation und des Zwischenspeichers für das aktuelle Signal kann im Fall praktisch 100%iger Korrelation ebenfalls die Aufzeichnung gestartet werden. Durch den Zwischenspeicher tritt kein Aufnahme-Verlust zu Beginn des Programmbeitrags ein.

Zusätzlich kann die erfindungsgemäße Vorrichtung eine vom Benutzer zu steuernde Ein- und Ausblendvorrichtung enthalten.

Bei Vorliegen eines Aufnahme-Wunsches kann der Empfänger oder die Aufzeichnungseinrichtung auch selbsttätig z.B. über ein Modem die Zuspielung des gewünschten Titels (Musik, Video) aus einer Datenbank veranlassen.

## Patentansprüche

1. Verfahren zur Aufnahme-Programmierung eines Programmbeitrages in einem Rundfunkempfangsgerät mit einer angeschlossenen Aufzeichnungseinrichtung (10), wobei mit einem Rundfunksignal Zusatzinformationen, welche eine spezifische Information und/oder Quellenangabe über den Aufzeichnungs/Programmbeitrag enthalten, empfangen werden, **gekennzeichnet durch**:
- während der Rundfunkübertragung eines bestimmten Programmbeitrages werden nach Vorgabe eines bestimmten Eingabebefehls eines Benutzers die decodierten bzw. demodulierten (7) Zusatzinformationen in Speichermitteln (13, 15) gespeichert;
- der Speicherinhalt wird ständig in einer Datenverarbeitungs/Auswerteschaltung (9) mit den nachfolgend empfangenen Zusatzinformationen verglichen;
- eine Aufnahme des gleichen Programmbeitrages mit der Aufzeichnungseinrichtung (10) wird automatisch ausgelöst, sobald eine Übertragung der Zusatzinformationen im gleichen oder in einem anderen Kanal festgestellt wird.

2. Verfahren nach Anspruch 1, **dadurch gekennzeichnet**, daß die Aufnahme unabhängig vom jeweilig eingestellten Programm/Sender/Kanal erfolgt.

3. Verfahren nach Anspruch 1 oder 2, **dadurch gekennzeichnet**, daß nach der Aufnahme des gewünschten Programmbeitrages die Zusatzinformationen aus den Speichermitteln (13, 15) gelöscht werden.

4. Verfahren nach einem der vorhergehenden Ansprüche, **dadurch gekennzeichnet**, daß als Zusatzinformation der Beitragstitel oder die Platten- oder Beitragsnummer des Programmbeitrags verwendet wird.

5. Verfahren nach einem der vorhergehenden Ansprüche, **dadurch gekennzeichnet**, daß zu Beginn eines Aufzeichnungs/Programmbeitrages eine Startinformation übertragen wird, und daß eine Aufnahme ausgelöst wird, wenn der Empfang der Startinformation und gleichzeitig das Vorhandensein der im Speicher gespeicherten zugehörigen Zusatzinformation festgestellt wird.

6. Verfahren nach einem der vorhergehenden Ansprüche, **dadurch gekennzeichnet**, daß die Startinformation als binäres Startwort in einem Speicher empfangsseitig gespeichert ist.

7. Verfahren nach einem der vorhergehenden Ansprüche, **dadurch gekennzeichne**t, daß als Startwort eine binär codierte Zeitinformation dient.

8. Vorrichtung zur Aufnahme-Programmierung eines Rundfunk-Programmbeitrages mit einer angeschlossenen Aufzeichnungseinrichtung (10), wobei mit dem Rundfunksignal Zusatzinformationen, welche eine spezifische Information und/oder Quellenangabe über den Aufzeichnungs/Programmbeitrag enthalten, empfangen werden, **gekennzeichnet durch**:
- Empfangs- oder Decodiermittel (1, 2) für das Rundfunksignal mit nachfolgenden Decodier- bzw. Demodulationsmitteln (7) für die Zusatzinformationen;
- an eine Datenverarbeitungs/Auswerteschaltung (9) angeschlossene Eingabemittel (12), über die nach Vorgabe eines bestimmten Eingabebefehls eines Benutzers während der Rundfunkübertragung eines bestimmten Programmbeitrages die decodierten bzw. demodulierten (7) Zusatzinformationen in Speichermitteln (13, 15) gespeichert werden, wobei nachfolgend dieser Speicherinhalt ständig in der Datenverarbeitungs/Auswerteschaltung (9), die ebenfalls die Empfangs- oder Decodiermittel (1, 2) steuert, mit den nachfolgend von den Decodier- bzw. Demodulationsmitteln (7) abgegebenen Zusatzinformationen verglichen wird und eine Aufnahme des gleichen Programmbeitrages mit der Aufzeichnungseinrichtung (10) automatisch ausgelöst wird, sobald eine Übertragung der Zusatzinformationen im gleichen oder in einem anderen Kanal festgestellt wird.

9. Vorrichtung nach Anspruch 8, **dadurch gekennzeichnet**, daß die Decodier- bzw. Demodulationsmittel (7) zusätzlich Startworte verarbeiten, wobei eine Aufnahme des entsprechenden Programmbeitrages mit der Aufzeichnungseinrichtung (10) automatisch dann ausgelöst wird, wenn das Vorliegen des Startworts ermittelt und gleichzeitig das Vorhandensein der im Speicher gespeicherten zugehörigen Zusatzinformation festgestellt wird.
